# NEUE EUROPÄISCHE PATENTSCHRIFT

(11) **EP 1 682 362 B2**
(45) Veröffentlichungstag und Bekanntmachung des Hinweises auf die Entscheidung über den Einspruch: **20.07.2016**
(45) Hinweis auf die Patenterteilung: 30.05.2007
(21) Anmeldenummer: 04787204.9
(22) Anmeldetag: 24.09.2004
(51) Int. Cl.: B60C 9/18, B60C 9/20, B60C 19/12

(54) **FAHRRADREIFEN MIT VERSTÄRKUNGSLAGE**
BICYCLE TYRE WITH REINFORCEMENT LAYER
PNEUS DE BICYCLETTE A COUCHE DE RENFORCEMENT

(30) Priorität: 24.10.2003 DE 10349794
(43) Veröffentlichungstag der Anmeldung: 26.07.2006
(73) Patentinhaber: Continental Aktiengesellschaft, 30165 Hannover (DE)
(72) Erfinder: KLAPP, Wolfgang, 34497 Korbach (DE); BENDE, Wolfgang, 35108 Allendorf (DE)
(74) Vertreter: Finger, Karsten
(86) Internationale Anmeldenummer: PCT/EP2004/052301
(87) Internationale Veröffentlichungsnummer: WO 2005/039894

(56) Entgegenhaltungen:
- WO-A-02/18158
- DE-A- 19 909 648
- US-A- 4 196 763
- US-A- 5 427 165
- US-A1- 2002 074 068
- 'Grasp The World of Tomorrow' VECTRAN 1999, Seiten 1 - 21
- 'Liquid Crystal Polymer Fiber' VECTRAN 1990,

## Beschreibung

Die Erfindung betrifft Fahrradreifen mit zumindest einer Verstärkungslage, die Festigkeitsträger enthält und die zwischen Karkasse und Laufstreifen und/oder zwischen den Karkasslagen unterhalb des Laufstreifens und/oder innerhalb des Laufstreifens angeordnet ist.

Fahrradreifen gemäß dem Oberbegriff des Anspruchs 1 sind z. B. aus dem deutschen Gebrauchsmuster DE 77 17 997 U1 und der DE 199 09 648 A1 bekannt. Die Festigkeitsträger in diesen genannten Schriften bestehen aus Aramid (aromatisches Polyamid). Die Verstärkungslagen dienen dabei als Pannenschutz. Sie sollen den Schlauch vor Durchstichen durch spitze Gegenstände, wie z. B. Scherben oder Granulat, und Beschädigungen schützen. Es ist auch bekannt, Pannenschutzlagen aus Polyamid, Polyester oder speziellen Gummilagen auszubilden.

Die bekannten Pannenschutzlagen bringen zur Gewährleistung einer besonders hohen Pannensicherheit allerdings ein hohes Gewicht mit sich, da für hohe Pannensicherheit mehrere Lagen, dickeres Gewebe oder dickere Garne eingesetzt werden. Das hohe Gewicht wirkt sich nachteilig auf den Rollwiderstand aus.

Aus der US 5,427,165 sind Autoreifen bekannt, die im Gürtel Festigkeitsträger mit einer (1+6)-Konstruktion aus sieben Monofilamenten aufweisen. Die Monofilamente weisen Durchmesser von 40 bis 400 µm auf und bestehen aus einem Flüssigkristallpolymer, wie z. B. Vectra^{®} von Hoechst Celanese. An Gürtel für Autoreifen werden hinsichtlich der gewünschten Eigenschaften völlig andere Anforderungen gestellt als an Verstärkungslagen für Fahrradreifen. So dient der Gürtel bei Autoreifen in Radialbauweise insbesondere der Form- und Fahrstabilität, welche durch hohe Torsions- und Biegesteifigkeit erreicht wird.

Der Erfindung liegtdie Aufgabe zu Grunde, einen Fahrradreifen bereitzustellen, dereine hohe Pannensicherheit bei niedrigem Gewicht aufweist.

Gelöst wird die Aufgabe gemäß Anspruch 1 dadurch, dass die Verstärkungslage Multifilamentgarne aus mehr als 30 Polyester-polyarylat-Filamenten enthält, wobei die Filamente aus geschmolzenem Flüssigkristallpolymer gesponnen sind.

Überraschenderweise kann bei Fahrradreifen mit diesen Multifilamentgarnen in der Verstärkungslage eine deutlich höhere Durchstichfestigkeit als mit anderen Garnen bei gleicher oder ähnlicher Lagenkonstruktion (gleiche Fadendichte, gleiche Lagenzahl) erzielt werden. Eine hohe Durchstichfestigkeit kann auch erreicht werden, wenn eine geringere Fadendichte des Garnes innerhalb einer Verstärkungslage vorliegt als herkömmlicherweise oderwenn weniger Verstärkungslagen, z. B. nur eine Verstärkungslage, eingesetzt werden. Das bietet den Vorteil, dass der Fahrradreifen auch bei hoher Pannensicherheit noch ein geringes Gewicht aufweist und dadurch einen geringeren Rollwiderstand hat. Multifilamentgarne mit mehr als 30 Filamenten bieten zudem eine hohe Ermüdungsbeständigkeit.

Gemäß einervorteilhaften Weiterbildung der Erfindung weisen die Polyester-polyarylat-Filamente einen Durchmesser von weniger als 40 µm auf. Bei Verwendung derartig dünner Filamente erzielt man eine gute dynamische Haltbarkeit und eine große Oberfläche des Festigkeitsträgers, wobei Letzteres zu einer guten Haftung zur umgebenden Kautschukmischung beiträgt.

Das Polyester-polyarylat weist bevorzugt folgende Struktur auf:

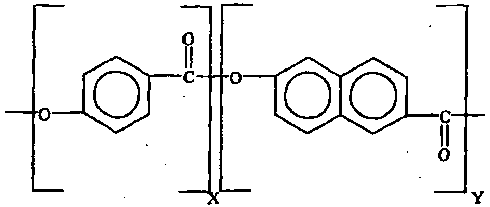

Es können z. B. Multifilamentgarne des Typs Vectran^{®} der Celanese AG verwendet werden. Mit Garnen aus diesem Polymer konnten besonders hohe Durchstichfestigkeiten erzielt werden.

Die speziellen Multifilamentgarne in der Verstärkungslage können als parallel zueinander verlaufende, sich nicht kreuzende Garne - als so genannte Cordgewebelage - mit einer Fadendichte von 130 bis 480 Garnen pro 10 cm, bevorzugt von 200 bis 300 Garnen pro 10 cm, vorliegen. Die parallelen Garne werden bei einem solchen Cordgewebe in der Regel von sehr dünnen Schussfäden, z. B. aus Baumwolle, während der Verarbeitung zusammengehalten. Diese Cordgewebelagen lassen sich gut verarbeiten und bieten mit den angegebenen Fadendichten einen guten Pannenschutz. Die Cordgewebelage kann als parallele Garne nur die Multifilamentgarne aus Polyester-polyarylat-Filamenten enthalten. Es ist aber auch möglich, dass gleichzeitig Garne aus anderem Material parallel in der Cordgewebelage mit vorliegen.

Bei den Cordgewebelagen mit Fadendichten von 130 bis 480 Garnen pro 10 cm hat es sich als vorteilhaft erwiesen, wenn die Feinheit der Garne 200 bis 950 dtex, bevorzugt 350 bis 600 dtex, beträgt, wobei bei höherer Fadendichte Garne mit geringerer Feinheit verwendet werden können und bei niedrigerer Fadendichte Garne mit hoher Feinheit, um eine gute Durchstichfestigkeit zu gewährleisten.

Die Garne innerhalb einer Cordgewebelage sind bevorzugt unter einem Winkel von 40 bis 50° zur Reifenumfangsrichtung und kreuzweise zu den Festigkeitsträgern der darunterliegenden Gewebelage, z. B. der Karkasslage, angeordnet. Auf diese Weise erzielt man einen zusätzlichen Verstärkungseffekt.

Alternativ zur Cordgewebelage können die Multifilamentgarne aus Polyester-polyarylat-Filamenten innerhalb einer Verstärkungslage auch in einem Gewebe vorliegen, wobei das Gewebe in Reifenumfangsrichtung dehnbar ausgebildet ist, um die Erhebung des Rohlings in der Reifenform zu ermöglichen. Bei dem Gewebe ist es unerheblich, ob alte Kett- und Schussfäden aus dem Multifilamentgarn bestehen oder ob auch Garne aus anderem Material vorliegen. Bevorzugt wird als Gewebe ein gewebtes Band mit Kettfäden aus dehnbarem Material, z. B. Polyamid- oder Polyestergarn, in Reifenumfangsrichtung und mit Schussfäden aus dem Multifilamentgarn eingesetzt, welches eine gute Herstellbarkeit das Reifens bei hohem Pannenschutz gewährleistet. Zudem ist ein solches Gewebe preiswerter als ein Gewebe, welche nur aus dem speziellen Multifilamentgarnen besteht.

Der Fahrradreifen kann nur eine Verstärkunglage aufweisen. Besonders hohe Pannensicherheit gewährleistet allerdings die Anordnung mehrerer erfindungsgemäßer Verstärkungslagen.

Der erfindungsgemäße Fahrradreifen kann nach herkömmlichen Verfahren, die für den Fahrradreifenbau bekannt sind, hergestellt werden, wobei die erfindungsgemäßen Verstärkungslagen z. B. als gummierte Cordgewebeoder Gewebelagen auf die Karkasse aufgelegt werden. Die Multifilamentgarne aus Polyester-polyarylat-Filamenten können vor der Gummierung mit der Kautschukmischung mit Haftvermittlersubstanzen zur besseren Haftung zwischen Gummi und Gam versehen werden.

Im Folgenden wird die Erfindung anhand eines Ausführungsbeispiels im Zusammenhang mit der nachstehenden Figur näher erläutert, ohne jedoch auf dieses Beispiel beschränkt zu sein.

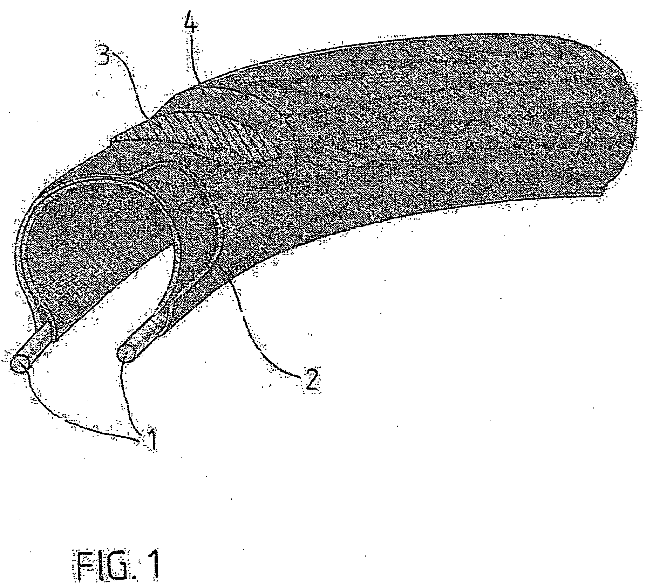

Die einzige Figur zeigt schematisch den Schnitt durch einen erfindungsgemäßen Fahrradreifen.

Der Fahrradreifen weist Wulstkerne 1, eine Karkasse 2, die um die Wulstkerne 1 geschlagen ist und unterhalb des Laufstreifens 4 überlappt, eine Verstärkungslage 3 und einen Laufstreifen 4 auf.

Es wurde ein schlauchloser Fahrradsportreifen (Breite 23 mm) gemäß der Figur mit einer Verstärkungslage 3 aus einem Cordgewebe mit Multifilamentgarnen aus je 80 Polyester-polyarylat-Filamenten mit einem Filamentdurchmesser von 23 µm (Vectran^{®} HS, Celanese AG) hergestellt. Die Garne wiesen ein Feinheit von 444 dtex auf. Die Fadendichte betrug 240 Garne pro 10 cm. Das Gewebe war diagonal geschnitten und wurde in einem Winkel von 45° zur Reifenumfangsrichtung aufgelegt. Der Reifen wurde hinsichtlich seiner Durchstichfestigkeit, seines Gewichtes, seines Rollwiderstandes und seines Lastdauerlaufes gemäß folgender Versuchsbeschreibungen untersucht:

Durchstichfestigkeit: Der Reifen wird auf einer Felge mit zugehörigem Schlauch montiert und mit dem Luftdruck gemäß einem Einsatz bei einem Erwachsenenfahrrad für 65 kg beaufschlagt. Dann wird ein trockener Stichel im Profilrillengrund im Zenit des Reifens aufgesetzt und mit einem Vorschub bis zum Durchstich vorbewegt. Die Kraft bis zum Durchstich wird ermittelt.

Rollwiderstand: Messung auf glattem Trommelprüfstand bei 50 daN Belastung bei einer Geschwindigkeit von 30 km/h. Die Rollwiderstandskraft wird gemessen und der Rollwiderstandskoeffizient in % bestimmt.

Lastdauerlauf: Messung auf Trommelprüfstand mit einer glatten Trommel bei 65 daN Belastung und einer Geschwindigkeit von 50 km/h. Die gefahrenen Kilometer bis zum Luftverlust werden gemessen.

Als Vergleich wurde ein Fahrradreifen hergestellt, der an Stelle der einzigen Verstärkungslage aus den Multifilamentgarnen aus je 80 Polyester-polyarylat-Filamenten zwei Verstärkungslagen aus gekreuzt liegenden Cordgewebelagen aus Nylongarn (Polyamidgarn) mit einer Feinheit von 470 dtex aufwies. Das Gewebe war diagonal geschnitten und wurde in einem Winkel von 45° zur Reifenumfangsrichtung kreuzend aufgelegt. Die Fadendichte betrug ebenfalls 240 Garne pro 10 cm. Auch dieser Reifen wurde hinsichtlich Durchstichfestigkeit, Gewicht, Rollwiderstand und Lastdauerlauf untersucht.

Die Ergebnisse der Versuche sind in Tabelle 1 dargestellt.

**Tabelle 1**

| | erfindungsgemäßer Reifen | Reifen mit Nylonlagen |
|---|---|---|
| Durchstichfestigkeit (daN) | 70,6 | 62,7 |
| Gewicht (g) | 213 | 220 |
| Rollwiderstandskoeffizient bei 8,5 bar (%) | 0,52 | 0,57 |
| Lastdauerlauf (km) | > 10700 | > 10900 |

Aus der Tabelle 1 wird ersichtlich, dass der erfindungsgemäße Reifen trotz einlagiger Verstärkung eine höhere Durchstichfestigkeit aufweist. Durch das verringerte Gewicht ergibt sich ein geringerer Rollwiderstand. Die Leistung beim Lastdauerlauf liegt auf gleichem Niveau wie beim Reifen mit den Nylonlagen. Die Versuche zum Lastdauerlauf wurden nach den in Tabelle 1 angegebenen Kilometerleistungen ohne Defekt abgebrochen.

## Patentansprüche

1. Fahrradreifen mit zumindest einer Verstärkungslage (3), die Festigkeitsträger enthält und die zwischen Karkasse (2) und Laufstreifen (4) und/oder zwischen den Karkasslagen unterhalb des Laufstreifens (4) und/oder innerhalb des Laufstreifens (4) angeordnet ist, dadurch gekennzeichet, dass die Verstärkungslage (3) Multifilamentgarne aus mehr als 30 Polyester-polyarylat-Filamenten enthält, wobei die Filamente aus geschmolzenem Flüssigkristallpolymer gesponnen sind, und wobei die Multiflamentgarne in der Verstärkungslage (3) als parallel zueinander verlaufende, sich nicht kreuzende Garne mit einer Fadendichte von 130 bis 480 Garnen pro 10 cm vorliegen und wobei die Multifilamentgarne unter einem Winkel von 40 bis 50° zur Reifenumfangsrichtung und kreuzweise zu den Festigkeitsträgern der darunterliegenden Gewebelage (2) angeordnet sind.

2. Fahrradreifen nach Anspruch 1, **dadurch gekennzeichnet, dass** die Polyester-polyarylat-Filamente einen Durchmesser von weniger als 40 µm aufweisen.

3. Fahrradreifen nach Anspruch 1 oder 2, **dadurch gekennzeichnet, dass** das Polyester-polyarylat folgende Struktur aufweist:

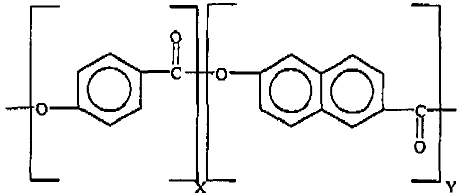

4. Fahrradreifen nach Anspruch 1, **dadurch gekennzeichnet, dass** die Multifilamentgarne eine Feinheit von 200 bis 950 dtex aufweisen.

5. Fahrradreifen nach zumindest einem der Ansprüche 1 bis 3, **dadurch gekennzeichnet, dass** die Multifilamentgarne in der Verstärkungslage (3) in einem Gewebe vorliegen, wobei das Gewebe in Reifenumfangsrichtung dehnbar ausgebildet ist.

6. Fahrradreifen nach Anspruch 5, **dadurch gekennzeichnet, dass** das Gewebe ein gewebtes Band mit Kettfäden aus dehnbarem Material in Reifenumfangsrichtung und mit Schussfäden aus dem Multifilamentgarn ist.

7. Fahrradreifen nach zumindest einem der vorhergehenden Ansprüche, **dadurch gekennzeichnet, dass** der Reifen zwei oder mehr Verstärkungslagen (3) enthält.

## Claims

1. Bicycle tyre comprising at least one reinforcing ply (3) which contains strength members and which is disposed between carcase (2) and tread strip (4) and/or between the carcase plies underneath the tread strip (4) and/or within the tread strip (4), **characterized in that** the reinforcing ply (3) contains multifilament yarns of more than 30 polyester polyarylate filaments, the filaments having being spun from molten liquid crystal polymer, wherein the multifilament yarns in the reinforcing ply (3) are present as mutually parallel, non-crossing yarns with a thread count of 130 to 480 yarns per 10 cm and wherein the multifilament yarns are disposed at an angle of 40 to 50° to the tyre's circumferential direction and crosswise to the strength members of the thereunderlying fabric ply (2).

2. Bicycle tyre according to Claim 1, **characterized in that** the polyester polyarylate filaments are less than 40 µm in diameter.

3. Bicycle tyre according to Claim 1 or 2, **characterized in that** the polyester polyarylate has the following structure:

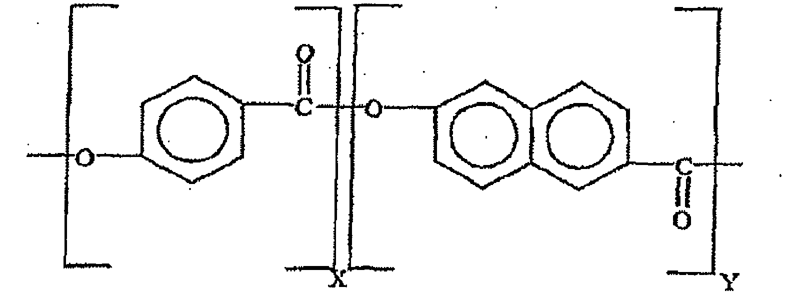

4. Bicycle tyre according to Claim 1, **characterized in that** the fineness of the multifilament yarns is in the range from 200 to 950 dtex.

5. Bicycle tyre according to at least one of the Claims 1 to 3, **characterized in that** the multifilament yarns in the reinforcing ply (3) are present in a woven fabric, the woven fabric being constructed to be extendable in the tyre's circumferential direction.

6. Bicycle tyre according to Claim 5, **characterized in that** the woven fabric is a woven tape having warp threads of extendable material in the tyre's circumferential direction and having weft threads composed of the multifilament yarn.

7. Bicycle tyre according to at least one of the preceding claims, **characterized in that** the tyre contains two or more reinforcing plies (3).

## Revendications

1. Pneu de bicyclette avec au moins une couche de renfort (3) qui contient des supports de résistance et qui est placée entre une carcasse (2) et une bande de roulement (4) et/ou entre les couches de la carcasse sous la bande de roulement (4) et/ou à l'intérieur de la bande de roulement (4), **caractérisé en ce que** la couche de renfort (3) contient des fils multifilaments composés de plus de 30 filaments de polyester-polyarylate, les filaments étant filés en polymère de cristal liquide fondu, et les fils multifilaments étant présents dans la couche de renfort (3) sous la forme de fils s'étendant à la parallèle les uns des autres, qui ne se croisent pas, avec une densité de fil de 130 à 480 fils par 10 cm et les fils multifilaments étant placés sous un angle de 40 à 50 ° par rapport à la direction circonférentielle du pneu et en croix par rapport aux supports de résistance de la couche tissée (2) sous-jacente.

2. Pneu de bicyclette selon la revendication 1, **caractérisé en ce que** les filaments de polyester-polyarylate ont un diamètre inférieur à 40 µm.

3. Pneu de bicyclette selon la revendication 1 ou 2, **caractérisé en ce que** le polyester-polyarylate a la structure suivante :

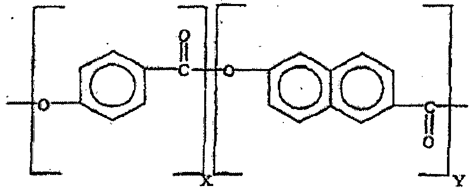

4. Pneu de bicyclette selon la revendication 1, **caractérisé en ce que** les fils multifilaments ont un denier de 200 à 950 dtex.

5. Pneu de bicyclette selon au moins l'une quelconque des revendications 1 à 3, **caractérisé en ce que** les fils multifilaments sont présents dans la couche de renfort (3) dans un tissu, le tissu étant conçu pour être extensible dans la direction circonférentielle du pneu.

6. Pneu de bicyclette selon la revendication 5, **caractérisé en ce que** le tissu est une bande tissée avec des fils de chaîne en matière extensible dans la direction circonférentielle du pneu et avec des fils de trames en fil multifilament.

7. Pneu de bicyclette selon au moins l'une quelconque des revendications précédentes, **caractérisé en ce que** le pneu contient une ou deux couches de renfort (3).
